# EUROPÄISCHE PATENTSCHRIFT

(11) **EP 1 529 688 B1**
(45) Veröffentlichungstag und Bekanntmachung des Hinweises auf die Patenterteilung: **14.02.2007**
(21) Anmeldenummer: 04026062.2
(22) Anmeldetag: 03.11.2004
(51) Int. Cl.: B60R 1/00, B60R 11/04

(54) **Kameraanordnung für Kraftfahrzeuge**
Camera arrangement for motor vehicles
Dispositif de caméra pour véhicules motorisés

(30) Priorität: 04.11.2003 DE 10351363
(43) Veröffentlichungstag der Anmeldung: 11.05.2005
(73) Patentinhaber: Hella KGaA Hueck & Co., 59552 Lippstadt (DE)
(72) Erfinder: Adameck, Markus, 59555 Lippstadt (DE); Hunecke, Jens, 59505 Bad Sassendorf (DE); Schäfer, Heiko, 59597 Erwitte (DE); Schulte, Michael, 33106 Paderborn (DE); Stebner, Volkmar, 33142 Büren (DE)

(56) Entgegenhaltungen:
- EP-A- 0 962 359
- DE-A- 10 204 764
- DE-C- 19 647 200

## Beschreibung

Die Erfindung bezieht sich auf eine Kameraanordnung für Kraftfahrzeuge mit Kameraeinheit zur Bilderfassung, wobei die Kameraeinheit in einer nicht aktiven Position von außen im wesentlichen unzugänglich hinter einem schwenkbaren Schutzelement angeordnet ist.

Eine derartige Anordnung für eine Rückfahrkameraeinheit ist aus der DE 102 04 764 A 1 bekannt. Die Anordnung der Kameraeinheit in der nicht aktiven Position hinter einem Schutzelement/Schutzdeckel hat den Vorteil, dass die Kameraeinheit, insbesondere das Objektiv der Kameraeinheit, vor Schmutz und Feuchtigkeit geschützt ist. Bei der Anordnung gemäß DE 102 04 764 A1 befindet sich die Kameraeinheit hinter einer Öffnung im Karosserieblech des Fahrzeuges, wobei die Öffnung von einem schwenkbaren Schutzdeckel verschlossen wird, wenn die Kameraeinheit sich in der nicht aktiven Position befindet. Zur Bilderfassung wird dann die Kameraeinheit über einen Schlitten motorisch linear (in Richtung der optischen Achse) verschoben, wobei der Schutzdeckel über eine Schubstange, die mit dem schwenkbaren Schutzdeckel und der verschiebbaren Kameraeinheit verbunden ist, infolge der Linearverschiebung der Kameraeinheit hochgeschwenkt wird, so dass die Öffnung freigegeben wird und die Kameraeinheit dann zur Bilderfassung teilweise aus der Öffnung herausgefahren wird.

Diese Art der Kameraanordnung gemäß DE 102 04 764 A1 ist jedoch in nachteiliger Weise sehr aufwendig, da zum einen ein Schlitten notwendig ist, mit dem die Kameraeinheit verschoben wird, und zum anderen ein zusätzliches Kraftübertragungselement in Form der Schubstange zwischen der Kameraeinheit und dem Schutzdeckel notwendig ist, um diesen zu verschwenken. Darüber hinaus ist diese Kameraanordnung auch anfälliger gegenüber Störungen, da die Verschiebe- und Verschwenkmechanik sehr aufwendig ist.

Aufgabe der Erfindung ist es daher, eine Kameraanordnung zu schaffen, die einfacher aufgebaut ist.

Diese Aufgabe wird durch die Merkmale des Anspruchs 1 gelöst.

Durch die "Huckepack"-Anordnung der Kameraeinheit auf dem schwenkbaren Schutzelement, ist somit kein Schlitten erforderlich, um die Kameraeinheit in die aktive Position zu verfahren. Außerdem kann das separate Kraftübertragungsmittel in Form der Schubstange entfallen. Somit ist die erfindungsgemäße Kameraanordnung gegenüber der Kameraanordnung gemäß DE 102 04 764 A1 wesentlich einfacher aufgebaut und daher auch weniger fehleranfällig.

Zur Befestigung der Kameraeinheit auf dem Schutzelement sind verschiedene Alternativen vorgesehen. In einer Variante wird die Kameraeinheit auf das Schutzelement aufgeschraubt. In einer weiteren Variante wird die Kameraeinheit über eine Rastverbindung auf dem Schutzelement montiert. Beide Varianten haben den Vorteil, das die Kameraeinheit im Fehlerfall leicht demontierbar und damit zerstörungsfrei lösbar auf dem Schutzelement angeordnet ist. In einer noch weiteren Variante wird die Kameraeinheit über eine Klebeverbindung auf dem Schutzelement befestigt.

Anhand der beigefügten Zeichnungen soll die Erfindung sowie verschiedene Ausführungsformen und weitere Vorteile nachfolgend näher erläutert werden. Es zeigt:
- Figur 1: einen Vertikalschnitt durch die erfindungsgemäße Kameraanordnung, in der nicht aktiven Position der Kameraeinheit,
- Figur 2: einen Schnitt wie in Figur 1, jedoch in der aktiven Position der Kameraeinheit,
- Figur 3: eine Seitenansicht der Kameraanordnung, in der auch der Antriebsmotor dargestellt ist,

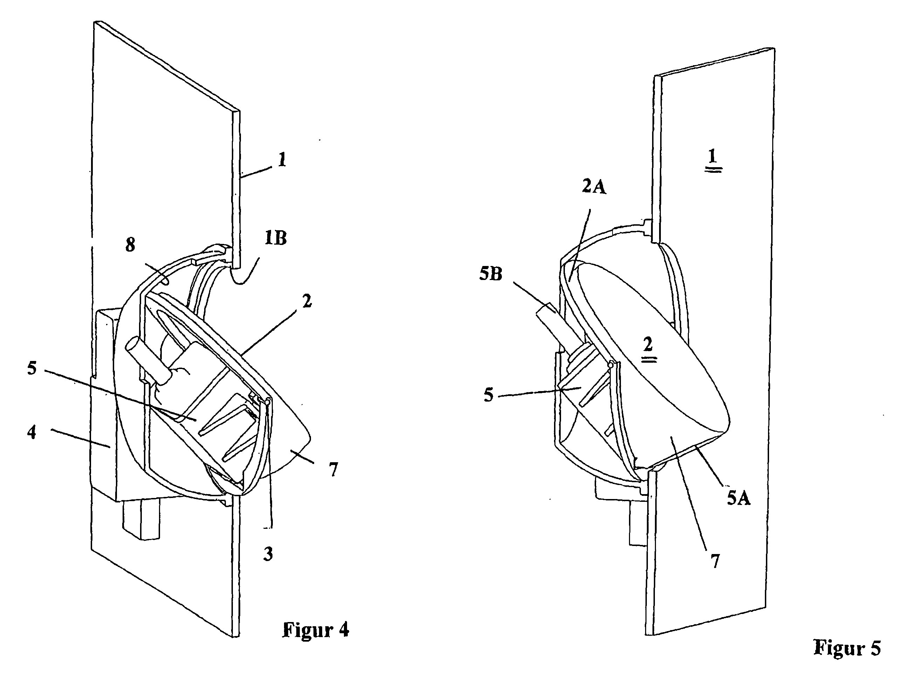

- Figur 4+5: jeweils eine perspektivische Darstellung der Kameraanordnung aus verschiedenen Blickwinkeln,
- Figur 6: eine Draufsicht auf die Rückseite (die der Frontseite des Schutzelements abgewandte Seite) der Kameraanordnung,
- Figur 7: eine Seitenansicht der Kameraanordnung mit einer Darstellung des auf der Schwenkachse angeordneten Schneckenrads und dem Antriebsmotor mit Schneckenantrieb,

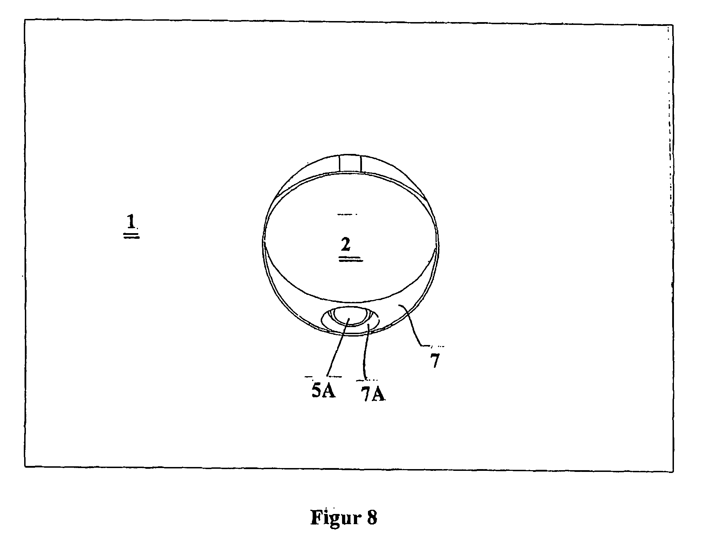

- Figur 8: eine Draufsicht auf die Vorderseite der Kameraanordnung,
- Figur 9-11: schematische Seitenansichten der Kameraanordnung zur Verdeutlichung der Wirkung der gewölbten Wandung hinter dem als Schutzdeckel ausgebildeten Schutzelement,
- Figur 12: eine schematische Seitenansicht der Kameraanordnung zur Verdeutlichung der Wirkung der gewölbten Wandung hinter der Öffnung am Karosserieblech.

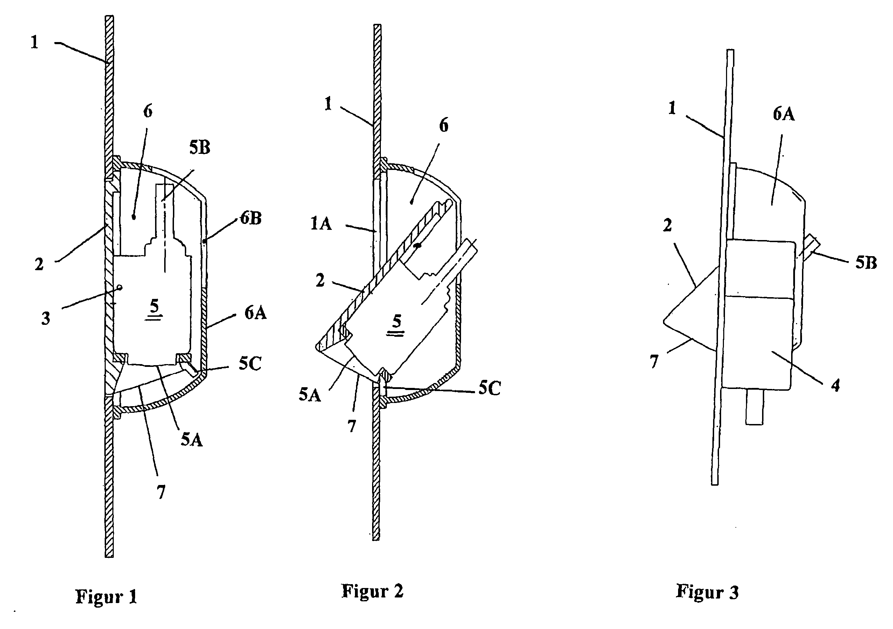

Figur 1 zeigt einen Vertikalschnitt durch die erfindungsgemäße Kameraanordnung, in der nicht aktiven Position der Kameraeinheit (5). In dieser Position ist die Kameraeinheit (5) verdeckt - und damit geschützt - hinter dem schwenkbaren Schutzelement/Schutzdeckel (2) angeordnet. Dabei ist im Karosserieblech (1) als Außenhaut des Fahrzeuges, eine vorzugsweise kreisrunde Öffnung (1A) vorgesehen, die von dem dann ebenfalls kreisrunden Schutzdeckel (2) zumindest fast vollständig verschlossen wird. Im Unterschied zur Kameraanordnung gemäß DE 102 04 764 A1 liegt der Schutzdeckel (2), in der die Kameraeinheit (5) verdeckenden Stellung, im wesentlichen bündig in der Fahrzeug-Außenhaut (1), wodurch der Schutzdeckel (2) unauffällig in der Fahrzeug-Außenhaut (1) integriert wird. Darüber hinaus kann, wie bereits aus der DE 102 04 764 A1 bekannt, der Schutzdeckel (2) in der Art eines Herstelleremblems ausgebildet sein oder ein entsprechendes Emblem auf dem Schutzdeckel (2) angeordnet sein. Bei der Kameraanordnung gemäß DE 102 04 764 A1 liegt der Schutzdeckel erhaben auf dem Karosserieblech auf, wobei dort außen auf dem Karosserieblech um die Öffnung herum eine Befestigungsplatte montiert ist, an der die Schwenkachse für den Schutzdeckel angeordnet ist.

Bei der erfindungsgemäßen Kameraanordnung ist die Schwenkachse (3) am Schutzdeckel (2) angeordnet, und zwar an der Rückseite des Schutzdeckels (2). Dabei verläuft die Schwenkachse (3) vorzugsweise horizontal und möglichst nah benachbart zur Mittellinie des Schutzdeckels (2). Sie muß jedoch nicht exakt durch den Schwerpunkt des Schutzdeckels (2) verlaufen. Dabei ist die Kameraeinheit (5) so an dem Schutzdeckel (2) angeordnet ist, dass sie in der nicht aktiven Position mit ihrer optischen Achse (OA) im wesentlichen vertikal nach unten ausgerichtet ist.

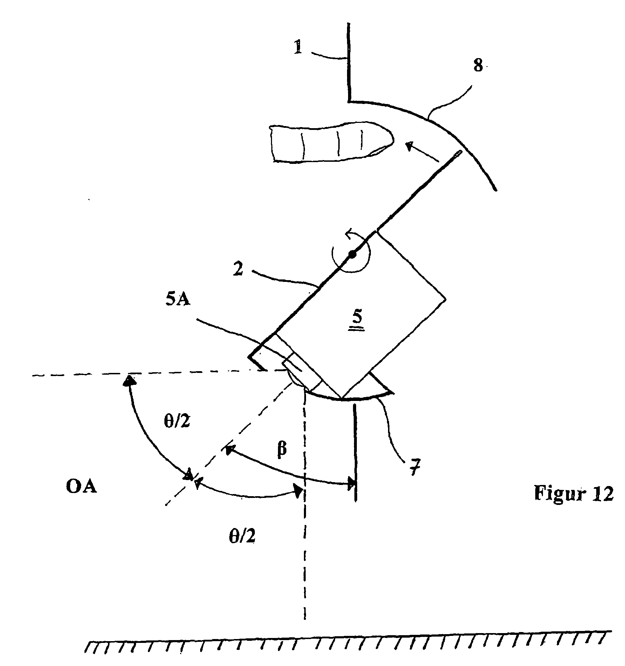

Um die Kameraeinheit (5) in die aktive Position zur Bilderfassung (vgl. Figur 2 und 3) zu bringen, wird nun der Schutzdeckel (2) um die horizontale Achse (3) geschwenkt, wobei automatisch auch die Kameraeinheit (5) geschwenkt wird, so dass der Erfassungsbereich (Erfassungskegel mit dem Öffnungswinkel (θ) - siehe Figur 12) des Kameraobjektivs (5A) auf den interessanten Bildbereich außerhalb der Fahrzeug-Außenhaut (1) gerichtet und freigegeben wird. Dabei wird durch die Schwenkbewegung nicht nur die optische Achse (OA) der Kameraeinheit (5) gegenüber der Vertikalen um einen Winkel (β) geschwenkt, sondern die Schwenkbewegung bewirkt auch, dass die Kameraeinheit (5), insbesondere das Kameraobjektiv (5A), teilweise aus der Öffnung (1A) herausgeschwenkt und gegenüber der Fahrzeug-Außenhaut (1) nach außen bewegt wird. Dies gestattet es, dass auch ein unterhalb der Kameraanordnung angeordneter Stoßfänger (nicht dargestellt) von der Kameraeinheit (5) erfasst werden kann. Wenn beispielsweise bei einem Erfassungskegel des Kameraobjektivs (5A) mit einem Öffnungswinkel von ca. 90° der Schutzdeckel (2) mit der Kameraeinheit um 45° verschwenkt wird, so dass die optische Achse (OA) der Kameraeinheit (5) unter einem Winkel von 45° schräg nach unten auf die Strasse gerichtet ist, so ist sichergestellt, dass sowohl der Stoßfänger als auch der Horizont von der Kameraeinheit (5) erfasst wird.

Ein weiterer Vorteil der erfindungsgemäßen Kameraanordnung besteht darin, dass der Bauraum, den die erfindungsgemäße Kameraanordnung hinter der Fahrzeug-Außenhaut (1) benötigt, im Vergleich zur Kameraanordnung gemäß DE 102 04 764 A1 wesentlich geringer ist, da kein Platz für eine lineare Verstellmechanik vorgesehen werden muß.

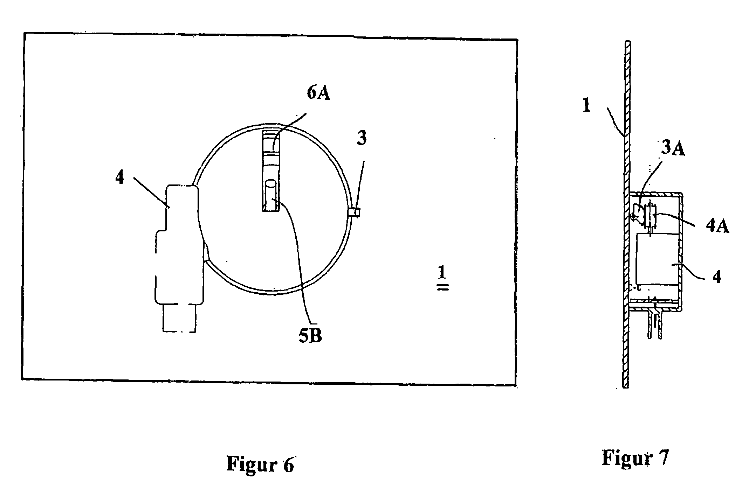

Die am Schutzdeckel (2) verdrehfest befestigte Schwenkachse (3A) ist in Lageraufnahmen, welche an der Fahrzeugkarosserie angeordnet sind, drehbar gelagert. Dabei weist die Schwenkachse (3) ein Schneckenrad (3A) auf, das mit einer über einen elektrischen Antriebsmotor (4) angetriebenen Schnecke (4A) kämmt (siehe Figur 7).

Die Aktivierung der Kameraeinheit (5), d.h. das Verschwenken des Schutzdeckels (2) und der Kameraeinheit (5) in die aktive Position, wird vorzugsweise, wie bereits auch in der DE 102 04 764 A1 beschrieben, über das Einlegen des Rückwärtsganges bewirkt, wodurch der Antriebsmotor (4) gestartet wird. Beim Herausnehmen des Rückwärtsganges schwenkt der Schutzdeckel (2) dann automatisch wieder zurück. Selbstverständlich kann das Auf- und Zuschwenken des Schutzdeckels (2) auch über einen separaten Schalter (nicht dargestellt) gesteuert werden.

Um eine definierte Schwenkposition des Schutzdeckels (2) in der aktiven Position der Kameraeinheit (5) zu gewährleisten, ist in vorteilhafter Weise an der Kameraeinheit (5) oder am Schutzdeckel (2) ein Anschlagelement (5C) vorgesehen, das ein weiteres Verschwenken des Schutzdeckels (2) verhindert, indem das Anschlagelement (5C) an einen Gegenanschlag am Karosserieblech anschlägt. Dabei wird der elektrische Antriebsmotor (4) automatisch abgeschaltet, wenn der Motorstrom in der Anschlagsstellung einen Schwellwert überschreitet.

Zum Abdichten des Raums hinter der Öffnung (1A) in der zugeschwenkten Stellung ist am Schutzdeckel (2) randseitig eine erste Anlagefläche (2A) ausbildet, die in der die Kameraeinheit (5) verdeckenden Stellung an einer randseitig die Öffnung (1A) umgebenden zweiten Anlagefläche (1B) der Fahrzeug-Außenhaut (1) anliegt. Dabei dienen diese Anlageflächen (2A, 1B) gleichzeitig als Anschlagelemente zur Begrenzung der Schwenkbewegung beim Zuschwenken des Schutzdeckels (2), wobei auch in diesem Fall der elektrische Antriebsmotor (4) automatisch abgeschaltet wird, wenn der Motorstrom in der Anschlagsstellung einen Schwellwert überschreitet. Um die Dichtwirkung zu erhöhen, kann an der ersten und/oder zweiten Anlagefläche (2A, 1 B) eine Dichtung (nicht dargestellt) vorgesehen sein. Auf diese Weise wird sichergestellt, dass die empfindliche Kameraeinheit (5) vor Schmutz und Feuchtigkeit geschützt ist.

Damit Schmutz und insbesondere Feuchtigkeit, die bei aufgeschwenktem Schutzdeckel (2) in die Öffnung (1A) eindringen können, keinen Schaden anrichten können, ist hinter der Öffnung (1A) ein Schutzraum (6) vorgesehen, der von einer Schutzwandung (6A) umgeben ist, welche eine Barriere für Schmutz und Feuchtigkeit darstellt. Der Schutzdeckel (2) und die Kameraeinheit (5) werden innerhalb der Schutzwandung (6A) verschwenkt. Dabei ist die elektrische Verbindungsleitung (5B) für die Kameraeinheit (5) durch die Schutzwandung (6A) hindurch geführt. Hierzu ist in der Schutzwandung (6A) ein Führungsschlitz (6B) vorgesehen, der eine Bewegung der elektrischen Verbindungsleitung (5B) beim Verschwenken der Kameraeinheit (5) ermöglicht (siehe insbesondere auch Figur 6). In einer alternativen Ausführungsform wird auf den Führungsschlitz (6B) verzichtet und die Schutzwandung (6A) vollständig geschlossen ausgebildet. In diesem Fall ist die Verbindungsleitung (5B) unbeweglich durch die Schutzwandung (6A) geführt. Allerdings ist dann die Verbindungsleitung (5B) im Inneren des Schutzraumes (6) entsprechend lang und flexibel ausgebildet, um beim Verschwenken der Kameraeinheit (5) nicht hinderlich zu sein.

Anhand der folgenden Problematik sollen weitere Vorteile der erfindungsgemäßen Kameraanordnung aufgezeigt werden:

Bei einem flachen Schutzdeckel (2) wird beim Aufschwenken des Schutzdeckels (2), um die Kameraeinheit (5) in die aktive Position zu bringen, oberhalb und unterhalb der horizontalen Schwenkachse (3) der Zugang zu dem hinter der Öffnung (1A) liegenden Bereich freigegeben. Damit sind zwei Probleme verbunden. Zum einen besteht eine Einklemmgefahr, da so in die Öffnung (1A) mit den Fingern hineingefasst werden kann und beim Zuschwenken des Schutzdeckels (2) die Finger dann zwischen dem Schutzdeckel (2) und dem Karosserieblech (1) eingeklemmt werden können. Zum anderen kann Feuchtigkeit und Schmutz eindringen.

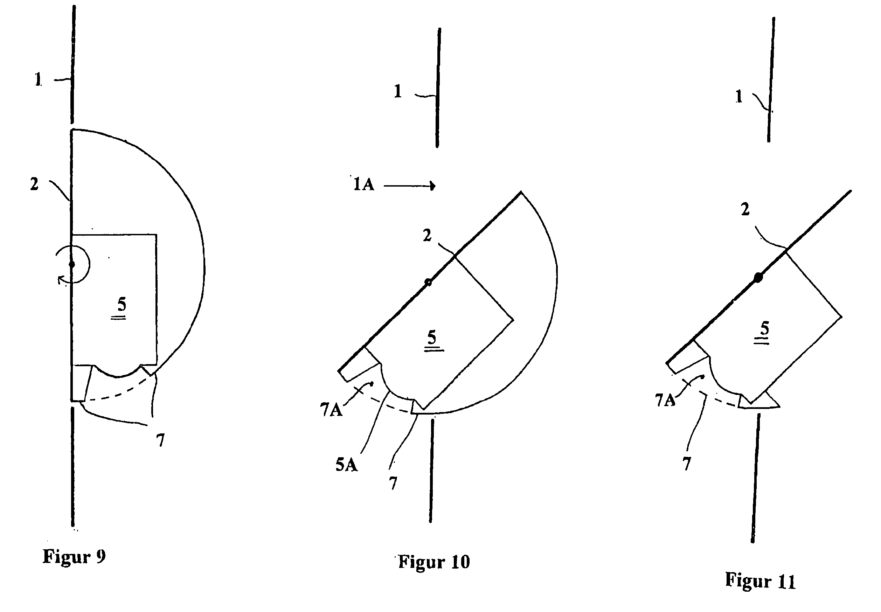

Hier sind zwei Gegenmaßnahmen vorgesehen.
Zum einen weist der Schutzdeckel (2) hinter seiner Frontseite zumindest abschnittsweise eine gewölbte Wandung (7) in Form einer Kugelkalotte oder in Form eines Zylindermantels auf, wobei die gewölbte Wandung (7) beim Verschwenken bis auf ein Spaltmaß nahezu formschlüssig gegenüber dem Rand der Öffnung (1A) bewegt wird. Hierdurch wird ein Eingreifen mit den Fingern und das Eindringen von Feuchtigkeit auch bei aufgeschwenktem Schutzdeckel zumindest in dem unterhalb der Schwenkachse (3A) liegenden Bereich verhindert. Dabei ist es nicht erforderlich, dass sich die gewölbte Wandung (7) über die gesamte Rückseite des Schutzdeckels (2) (wie in Figur 9 und 10 dargestellt) erstreckt, sondern es reicht es, wenn die Wölbung (7) sich lediglich über den Abschnitt erstreckt, der beim Aufschwenken des Schutzdeckels (2) herausgeschwenkt wird - siehe Figur 11. Die gewölbte Wandung (7) ist zumindest abschnittsweise in Form einer Kugelkalotte ausgebildet, wenn der Schutzdeckel (2) und die Öffnung (1A) kreisrund ausgebildet sind, wohingegen die gewölbte Wandung (7) zumindest abschnittsweise in Form eines Zylindermantels ausgebildet ist, wenn der Schutzdeckel (2) und die Öffnung (1A) rechteckig ausgebildet sind. Da das Kameraobjektiv (5A) sich hinter der gewölbten Wandung (7) am Schutzdeckel (2) befindet, ist in der Wölbungswandung (7) eine lichte Aussparung (7A) für das Kameraobjektiv (5A) vorgesehen.

Zum anderen ist hinter der Fahrzeug-Außenhaut (1) an derselben ebenfalls eine zumindest abschnittsweise gewölbte Wandung (8) in Form einer Kugelkalotte oder in Form eines Zylindermantels angeordnet ist, wobei der Schutzdeckel (2) mit seinem Rand beim Verschwenken bis auf ein Spaltmaß gegenüber der gewölbten Wandung (8) an der Fahrzeug-Außenhaut (1) nahezu formschlüssig bewegt wird - siehe Figur 12. Auf diese Weise wird ein Einklemmen verhindert, da ein Hintergreifen der Fahrzeug-Außenhaut (1) bei aufgeschwenktem Schutzdeckel (2) verhindert wird und beim Zuschwenken des Schutzdeckels (2) in die Öffnung (1A) hineingreifende Finger, ohne dass sie eingeklemmt werden, zurückgeschoben werden. Diese gewölbte Wandung (8) ist vorzugsweise Teil der vorstehend bereits erwähnten Schutzwandung (6A), welche den hinter der Öffnung (1A) liegenden Schutzraum (6) umgibt. Die gewölbte Wandung/Schutzwand kann einstückig mit dem Karosserieblech ausgeführt sein oder als separates Teil über eine Schraub- oder Schweißverbindung an dem Karosserieblech befestigt sein.

### Bezugszeichenliste:

- 1): Fahrzeug-Außenhaut (Karosserieblech)
- 1A): Öffnung in der Fahrzeug-Außenhaut
- 1 B): Randseitig die Öffnung umgebenden Anlagefläche zur Abdichtung
- 2): Schutzelement/Schutzdeckel
- 2A): Randseitige Anlagefläche am Schutzdeckel zur Abdichtung
- 3): Schwenkachse für den Schutzdeckel
- 3A): Schneckenrad an der Schwenkachse
- 4): Antriebsmotor
- 4A): Antriebsschnecke am Antriebsmotor
- 5): Kameraeinheit
- 5A): Kameraobjektiv
- 5B): Verbindungsleitung für die Kameraeinheit
- 6): Schutzraum
- 6A): Schutzwandung
- 6B): Führungsschlitz in der Schutzwandung für Verbindungsleitung
- 7): Gewölbte, kugelkalottenförmige Wandung am Schutzdeckel
- 7A): Lichte Aussparung in der kugelkalottenförmige Wandung am Schutzdeckel für das Kameraobjektiv
- 8): Gewölbte, kugelkallotenförmige Wandung an der Fahrzeug-Außenhaut

## Patentansprüche

1. Kameraanordnung für Kraftfahrzeuge mit Kameraeinheit (5) zur Bilderfassung, wobei die Kameraeinheit (5) in einer nicht aktiven Position von außen im wesentlichen unzugänglich hinter einem schwenkbaren Schutzelement (2) zum Schutz vor Schmutz und Feuchtigkeit angeordnet ist,
**dadurch gekennzeichnet, dass**
- die Kameraeinheit (5) auf dem Schutzelement (2) angeordnet ist und mit diesem schwenkbar ist, wobei das Schutzelement (2) mit der darauf angeordneten Kameraeinheit (5) aus der die Kameraeinheit (5) verdeckenden Stellung, in der die Kameraeinheit (5) sich in der nicht aktiven Position befindet, in eine Stellung schwenkbar ist, in der die Kameraeinheit (5) sich in einer aktiven Position zur Bilderfassung befindet,
- das Schutzelement (2) als Schutzdeckel ausgebildet ist, der in der die Kameraeinheit (5) verdeckenden Stellung, eine Öffnung (1A) in der Fahrzeug-Außenhaut (1) zumindest fast vollständig verschließt.

2. Kameraanordnung nach Anspruch1,
**dadurch gekennzeichnet, dass**
das Schutzelement (2) in der die Kameraeinheit(5) verdeckenden Stellung im wesentlichen bündig in der Außenhaut, Karosserieblech, des Kraftfahrzeuges liegt.

3. Kameraanordnung nach Anspruch 1 oder 2,
**dadurch gekennzeichnet, dass**
hinter der Öffnung (1A) ein Schutzraum (6) vorgesehen ist, der von einer Schutzwandung (6A) umschlossen wird.

4. Kameraanordnung nach einem der vorstehenden Ansprüche,
**dadurch gekennzeichnet, dass**
der Schutzdeckel (2) randseitig eine erste Anlagefläche (2A) ausbildet, die in der die Kameraeinheit (5) verdeckenden Stellung zum Abdichten der Öffnung (1A) an einer randseitig die Öffnung (1A) umgebenden zweiten Anlagefläche (1B) der Fahrzeug-Außenhaut (1) anliegt.

5. Kameraanordnung nach Anspruch 4,
**dadurch gekennzeichnet, dass**
auf der ersten und/oder der zweiten Anlagefläche (2A, 1B) eine Dichtung angeordnet ist.

6. Kameraanordnung nach Anspruch einem der vorstehenden Ansprüche,
**dadurch gekennzeichnet, dass**
der Schutzdeckel (2) hinter seiner Frontseite zumindest abschnittsweise eine gewölbte Wandung (7) in Form einer Kugelkalotte oder in Form eines Zylindermantels aufweist, wobei die gewölbte Wandung (7) beim Verschwenken des Schutzdeckels (2) den Zugang zu dem hinter der Öffnung (1A) liegenden Bereich versperrt.

7. Kameraanordnung nach Anspruch 6,
**dadurch gekennzeichnet, dass**
die gewölbte Wandung (7) am Schutzdeckel (2) beim Verschwenken bis auf ein Spaltmaß nahezu formschlüssig gegenüber dem Rand der Öffnung (1A) bewegt wird.

8. Kameraanordnung nach Anspruch 6 oder 7,
**dadurch gekennzeichnet, dass**
die gewölbte Wandung (7) am Schutzdeckel (2) eine lichte Aussparung (7A) für das Objektiv (5B) der Kameraeinheit (5) aufweist.

9. Kameraanordnung nach einem der vorstehenden Ansprüche,
**dadurch gekennzeichnet, dass**
hinter der Fahrzeug-Außenhaut (1) an derselben zumindest abschnittsweise eine gewölbte Wandung (8) in Form einer Kugelkalotte oder in Form eines Zylindermantels angeordnet ist, wobei die gewölbte Wandung (8) beim Verschwenken des Schutzdeckels (2) den Zugang zu dem hinter der Öffnung (1A) liegenden Bereich versperrt.

10. Kameraanordnung nach Anspruch 9,
**dadurch gekennzeichnet, dass**
der Schutzdeckel (2) mit seinem Rand beim Verschwenken bis auf ein Spaltmaß gegenüber der gewölbten Wandung (8) der Fahrzeug-Außenhaut (1) nahezu formschlüssig bewegt wird.

11. Kameraanordnung nach einem der vorstehenden Ansprüche,
**dadurch gekennzeichnet, dass**
mindestens ein Anschlagelement (5C) vorgesehen ist, das ein Verschwenken des Schutzelements (2) über die Stellung hinaus verhindert, in der die Kameraeinheit (5) sich in der aktiven Position zur Bilderfassung befindet, und/oder ein Verschwenken des Schutzelements (2) über die Stellung hinaus verhindert, in der die Kameraeinheit (5) sich in der nicht aktiven Position befindet.

12. Kameraanordnung nach Anspruch 11,
**dadurch gekennzeichnet, dass**
das Schutzelement (2) gemeinsam mit der Kameraeinheit (5) über einen elektrischen Antriebsmotor (4) verschwenkt wird, wobei der elektrische Antriebsmotor (4) automatisch abgeschaltet wird, wenn der Motorstrom in der Anschlagstellung des Schutzelements (2) einen Schwellwert überschreitet.

13. Kameraanordnung nach einem der vorstehenden Ansprüche,
**dadurch gekennzeichnet, dass**
die Schwenkachse (3) am Schutzelement (2) angeordnet ist.

14. Kameraanordnung nach einem der vorstehenden Ansprüche,
**dadurch gekennzeichnet, dass**
die Schwenkachse (3) ein Schneckenrad (3A) aufweist, das über einen vom Antriebsmotor (4) angetriebenen Schneckenantrieb (4A) angetrieben wird.

15. Kameraanordnung nach einem der vorstehenden Ansprüche,
**dadurch gekennzeichnet, dass**
das Schutzelement (2) gemeinsam mit der Kameraeinheit (5) um eine im wesentlichen horizontale Achse geschwenkt wird.

16. Kameraanordnung nach Anspruch 15,
**dadurch gekennzeichnet, dass**
die Kameraeinheit (5) so an dem Schutzelement (2) angeordnet ist, dass die Kameraeinheit (5) in der nicht aktiven Position mit ihrer optischen Achse (OA) im wesentlichen vertikal nach unten ausgerichtet ist.

## Claims

1. Camera arrangement for motor vehicles with a camera unit (5) for image capturing, where the camera unit (5) cannot be basically accessed from the outside when in an inactive position by being hidden behind a swiveling element (2) protecting the camera unit (5) against dirt and humidity,
wherein
- the camera unit (5) is attached to the protecting element (2) and can be swiveled with that element, where the protecting element (2) and the camera unit (5) attached to it can be swiveled out of the position hiding the camera unit (5) when the camera unit (5) is at its inactive position and be moved to a position at which the camera unit (5) is at its active position for image capture,
- the protecting element (2) is designed as a protecting lid which at least almost completely covers an opening (1A) in the vehicle skin (1) when the camera unit (5) is at its hidden position.

2. Camera arrangement as in claim 1,
wherein
the protecting element (2) is more or less flush with the skin (body panel) of the motor vehicle when the camera unit (5) is at its hidden position.

3. Camera arrangement as in claims 1 or 2,
wherein
a protecting cavity (6) is located behind the opening (1A) which is enclosed by protecting walling (6A).

4. Camera arrangement as in one of the above claims,
wherein
the edge of the protecting lid (2) makes up a first abutment area (2A) which seals off the opening (1A) when the camera unit (5) is at its hidden position by resting on a second abutment area (1 B) which runs around the edge of the opening (1A) along the vehicle skin (1).

5. Camera arrangement as in claim 4,
wherein
the first and/or second abutment area (2A, 1B) carries a gasket seal.

6. Camera arrangement as in one of the above claims,
wherein
the protecting lid (2) has a vaulted wall (7) in the shape of a ball joint or in the shape of a cylindrical shell along at least some sections behind its front face, where the vaulted wall (7) covers the access to the cavity located behind the opening (1A) when the protecting lid (2) swivels round.

7. Camera arrangement as in claim 6,
wherein
except for a gap size, the vaulted wall (7) on the protecting lid (2) provides an almost perfect fit with the edge of the opening (1A) when being swiveled round.

8. Camera arrangement as in claims 6 or 7,
wherein
the vaulted wall (7) on the protecting lid (2) has a recess opening (7A) for the objective lens (5B) of the camera unit (5).

9. Camera arrangement as in one of the above claims,
wherein
a vaulted wall (8) in the shape of a ball joint or in the shape of a cylindrical shell is located behind the vehicle skin (1) and touching the vehicle skin (1) in at least some sections, where the vaulted wall (8) covers the access to the cavity located behind the opening (1A) when the protecting lid (2) swivels round.

10. Camera arrangement as in claim 9,
wherein
except for a gap size, the edge of the protecting lid (2) retains its almost perfect fit with the vaulted wall (8) on the vehicle skin (1) when swiveling round.

11. Camera arrangement as in one of the above claims,
wherein
there is at least one stopper element (5C) which prevents the protecting element (2) from swiveling beyond the point at which the camera unit (5) is at its active position for image capture, and/or prevents the protecting element (2) from swiveling beyond the point at which the camera unit (5) is at its inactive position.

12. Camera arrangement as in claim 11,
wherein
an electric drive (4) swivels both, the protecting element (2) and the camera unit (5), where the electric drive (4) automatically switches off when the motor current exceeds a threshold at the stopping point of the protecting element (2).

13. Camera arrangement as in one of the above claims,
wherein
the swivel axle (3) is attached to the protecting element (2).

14. Camera arrangement as in one of the above claims,
wherein
the swivel axle (3) features a worm wheel (3A) which is driven by a worm whell drive (4A) driven by the drive (4).

15. Camera arrangement as in one of the above claims,
wherein
the protecting element (2) and the camera unit (5) share a mainly horizontal axis around which they swivel.

16. Camera arrangement as in claim 15,
wherein
the camera unit (5) is attached to the protecting element (2) such that the optical axis (OA) of the camera unit (5) mainly points vertically down when the camera unit (5) is at its inactive position.

## Revendications

1. Agencement de caméra pour véhicules à moteur, avec un module de caméra (5) pour l'acquisition d'images, dans lequel le module de caméra (5) est disposé dans une position non active de manière pratiquement inaccessible de l'extérieur derrière un élément de protection pivotant (2) pour le protéger contre les salissures et l'humidité, **caractérisé en ce que**
- le module de caméra (5) est disposé sur l'élément de protection (2) et peut pivoter avec celui-ci, l'élément de protection (2) pouvant pivoter avec le module de caméra (5) disposé dessus depuis la position qui masque le module de caméra (5), dans laquelle le module de caméra (5) se trouve en position non active, dans une position dans laquelle le module de caméra (5) se trouve dans une position active pour l'acquisition d'images,
- l'élément de protection (2) est réalisé sous la forme d'un cache de protection qui, dans la position masquant le module de caméra (5), ferme au moins en quasi totalité une ouverture (1A) dans l'enveloppe extérieure (1) du véhicule.

2. Agencement de caméra selon la revendication 1, **caractérisé en ce que** l'élément de protection (2), dans la position qui masque le module de caméra (5), affleure sensiblement l'enveloppe extérieure, la tôle de carrosserie, du véhicule.

3. Agencement de caméra selon la revendication 1 ou la revendication 2, **caractérisé en ce qu'**il est prévu à l'arrière de l'ouverture (1A) un espace protecteur (6) qui est entouré par une paroi de protection (6A).

4. Agencement de caméra selon l'une des revendications précédentes, **caractérisé en ce que** le cache de protection (2) forme sur son rebord une première surface d'appui (2A) qui, dans la position qui masque le module de caméra (5), est en contact pour obturer l'ouverture (1A) avec une deuxième surface d'appui (1 B) entourant sur son rebord l'ouverture (1A) de l'enveloppe extérieure (1) du véhicule.

5. Agencement de caméra selon la revendication 4, **caractérisé en ce qu'**un joint d'étanchéité est disposé sur la première et/ou sur la deuxième surface d'appui (2A, 1 B).

6. Agencement de caméra selon l'une des revendications précédentes, **caractérisé en ce que** le cache de protection (2) présente à l'arrière de sa face avant, au moins par segments, une paroi incurvée (7) ayant la forme d'une calotte sphérique ou d'une enveloppe cylindrique, la paroi incurvée (7) bloquant l'accès à la zone située à l'arrière de l'ouverture (1A) lorsque le cache de protection (2) pivote.

7. Agencement de caméra selon la revendication 6, **caractérisé en ce que** la paroi incurvée (7) du cache de protection (2) est déplacé de manière pratiquement géométrique, à une cote de jeu près, par rapport au rebord de l'ouverture (1A) lorsque le cache pivote.

8. Agencement de caméra selon la revendication 6 ou la revendication 7, **caractérisé en ce que** la paroi incurvée (7) du cache de protection (2) présente un dégagement (7A) pour l'objectif (5B) du module de caméra (5).

9. Agencement de caméra selon l'une des revendications précédentes, **caractérisé en ce que**, à l'arrière de l'enveloppe extérieure (1) du véhicule et sur celle-ci, il est prévu une paroi incurvée au moins par segments (8) ayant la forme d'une calotte sphérique ou d'une enveloppe cylindrique, la paroi incurvée (8) bloquant l'accès à la zone située à l'arrière de l'ouverture (1A) lorsque le cache de protection (2) pivote.

10. Agencement de caméra selon la revendication 9, **caractérisé en ce que** le cache de protection (2) avec son rebord est déplacé de manière pratiquement géométrique, à une cote de jeu près, par rapport à la paroi incurvée (8) de l'enveloppe extérieure (1) du véhicule lorsqu'il pivote.

11. Agencement de caméra selon l'une des revendications précédentes, **caractérisé en ce qu'**il est prévu au moins un élément de butée (5C) qui empêche un pivotement de l'élément de protection (2) au-delà de la position dans laquelle le module de caméra (5) se trouve dans la position active pour l'acquisition d'images et/ou un pivotement de l'élément de protection (2) au-delà de la position dans laquelle le module de caméra (5) se trouve dans la position non active.

12. Agencement de caméra selon la revendication 11, **caractérisé en ce que** pivotement de l'élément de protection (2) ensemble avec le module de caméra (5) est assuré par un moteur d'entraînement électrique (4), le moteur d'entraînement électrique (4) étant automatiquement désactivé lorsque l'intensité du courant du moteur dans la position de butée de l'élément de protection (2) dépasse une valeur seuil.

13. Agencement de caméra selon l'une des revendications précédentes, **caractérisé en ce que** l'axe de pivotement (3) est disposé sur l'élément de protection (2).

14. Agencement de caméra selon l'une des revendications précédentes, **caractérisé en ce que** l'axe de pivotement (3) présente une roue tangente (3A) qui est mue par une transmission à vis sans fin (4A) entraînée par un moteur d'entraînement (4).

15. Agencement de caméra selon l'une des revendications précédentes, **caractérisé en ce que** l'élément de protection (2) ensemble avec le module de caméra (5) pivote autour d'un axe sensiblement horizontal.

16. Agencement de caméra selon la revendication 15, **caractérisé en ce que** le module de caméra (5) est disposé sur l'élément de protection (2) de telle façon que, dans la position non active, le module de caméra (5) est orienté avec son axe optique (OA) sensiblement vertical vers le bas.
